# EUROPÄISCHE PATENTSCHRIFT

(11) **EP 3 754 178 B1**
(45) Veröffentlichungstag und Bekanntmachung des Hinweises auf die Patenterteilung: **25.05.2022**
(21) Anmeldenummer: 19180538.1
(22) Anmeldetag: 17.06.2019
(51) Int. Cl.: F03D 7/02, F03D 7/04

(54) **VERFAHREN ZUM BETREIBEN EINES WINDPARKS**
METHOD FOR OPERATING A WIND FARM
PROCÉDÉ DE FONCTIONNEMENT D'UN PARC ÉOLIEN

(43) Veröffentlichungstag der Anmeldung: 23.12.2020
(73) Patentinhaber: Nordex Energy SE & Co. KG, 22419 Hamburg (DE)
(72) Erfinder: Großeholz, Georg, 22767 Hamburg (DE)
(74) Vertreter: Hauck Patentanwaltspartnerschaft mbB

(56) Entgegenhaltungen:
- EP-A2- 2 028 368
- WO-A1-2018/006920
- US-B1- 8 598 726

## Beschreibung

Die Erfindung betrifft ein Verfahren zum Betreiben eines Windparks mit einer Vielzahl von Windenergieanlagen, wobei die Windenergieanlagen ansprechend auf einen empfangenen Sollwert einer leistungsbezogenen elektrischen Größe zur Abgabe einer Leistung ansteuerbar und/oder einregelbar sind. Zudem betrifft die Erfindung einen Windpark mit einer Vielzahl von Windenergieanlagen und mit mindestens einer Steuereinheit.

Es ist grundsätzlich bekannt, die durch einen Windpark insgesamt abgegebene Leistung durch die Vorgabe eines Sollwerts für diesen Windpark zu begrenzen. Dies kann beispielsweise nötig sein, wenn aufgrund bestimmter Umstände (z.B. Netzbeschränkungen, fehlende Nachfrage) nicht die zur Verfügung stehende Leistung in das elektrische Netz eingespeist werden soll. Ein solcher gedrosselter Betrieb des Windparks macht es notwendig, mindestens für einige der Windenergieanlagen in dem Windpark ebenfalls einen gedrosselten Betrieb vorzusehen oder diese vollständig abzuschalten. Unterschiedliche Verfahren zum Regeln des Output eines Windparks sind bekannt aus WO 2010/028954 A2, EP 2 896 102 B1, EP 2 824 322 A1, EP 2757250 A1.

Aus EP 2 028 368 B1 ist ein Verfahren zum Betreiben eines Windparks bekannt, wobei eine übergeordnete Steuerung jeden Sollwert für die einzelnen Windenergieanlagen abhängig von dem aktuell maximal möglichen Wert, den die Windenergieanlage erzeugen kann, bestimmt. Somit erfolgt eine Verteilung der insgesamt durch den Windpark bereitzustellenden Größe abhängig davon, was jede einzelne Windenergieanlage aktuell bereitstellen kann. Zur Bestimmung der individuellen Sollwerte für die Windenergieanlagen wird dabei der maximal mögliche Wert des Windparks durch die Anzahl der Windenergieanlagen in dem Windpark dividiert und gewichtet mit dem Quotienten aus dem aktuell maximal möglichen Wert der betreffenden Windenergieanlage und dem Mittelwert der aktuell maximal möglichen Werte aller Windenergieanlagen. Durch die Abhängigkeit der Verteilung vom aktuell maximal möglichen Wert im Windpark, wirkt sich die Änderung bereits eines Wertes einer Windenergieanlage auf die Sollwerte aller Windenergieanlagen aus. Durch den von ihren jeweiligen Betriebszuständen abhängigen Einfluss der Windenergieanlagen des Windparks auf das Windfeld und die Anströmbedingungen, die andere Windenergieanlagen des Windparks erfahren, kann die Änderung der Windverhältnisse an einer Windenergieanlage alle anderen Anlagen beeinflussen. Abhängig von den vorliegenden Windverhältnissen kann dies zu starken Schwankungen der Sollwerte der einzelnen Windenergieanlagen und gegebenenfalls zu einem Schwingungsverhalten in der Regelung, bedingt durch Wechselwirkungen der Anlagen untereinander, führen. Aufgrund der Wechselwirkung einer windaufwärts angeordneten Anlage mit dem Windfeld kann es zu einer Änderung der ermittelten verfügbaren Wirkleistung windabwärts angeordneter Anlagen kommen. So werden bei der Änderung der Leistungsabgabe durch Pitchbewegungen der Rotorblätter Verwirbelungen induziert, welche die an nachfolgenden Anlagen verfügbare Leistung beeinflussen. Die Änderung der Leistungsabgabe einer Anlage bewirkt in der Regel eine Änderung der Schubkraft, die auf die Gondel dieser Anlage wirkt. Die Anlage kann hierdurch in eine Nickbewegung versetzt werden. Durch dieses Nicken ändert sich die relative Windgeschwindigkeit und somit die verfügbare Wirkleistung.

Ausgehend von dem erläuterten Stand der Technik liegt der Erfindung die Aufgabe zugrunde, ein Verfahren zum Betreiben eines Windparks bereitzustellen, welches die Leistungsausgabe des Windparks in effizienter und zuverlässiger Weise regelt.

Die Erfindung löst die Aufgabe durch das Verfahren gemäß Anspruch 1. Vorteilhafte Ausgestaltungen sind Gegenstand der abhängigen Ansprüche, der Beschreibung sowie der Figuren.

Das erfindungsgemäße Verfahren der eingangs genannten Art weist die folgenden Schritte auf:
a) Ermitteln einer auf die Windenergieanlagen verteilbaren Leistungsmenge abhängig von einer Sollleistung für den gesamten Windpark und von Minimalleistungen der einzelnen Windenergieanlagen,
b) Erstellen einer gewichteten Verteilung, die den einzelnen Windenergieanlagen jeweils einen Anteil an der verteilbaren Leistungsmenge zuordnet,
c) Festlegen von Sollwerten für die Windenergieanlagen, die aufgrund ihrer momentan verfügbaren Leistungen weniger oder gerade so viel Leistung abgeben können, wie ihnen durch die gewichtete Verteilung zugeordnet wurde, wobei deren Sollwerte derart festgelegt werden, dass diese Windenergieanlagen jeweils zur Abgabe ihrer momentan verfügbaren Leistungen jedoch zumindest zur Abgabe ihrer Minimalleistungen angesteuert werden,
d) Ermitteln einer verbleibenden, noch zu verteilenden Leistungsmenge,
e) Erstellen einer weiteren gewichteten Verteilung, die den verbleibenden Windenergieanlagen, die aufgrund ihrer momentan verfügbaren Leistungen mehr Leistung abgeben können, als ihnen durch die vorherige gewichtete Verteilung zugeordnet wurde, jeweils einen Anteil an der verbleibenden Leistungsmenge zuordnet,
f) Festlegen von Sollwerten für diejenigen der verbleibenden Windenergieanlagen, die aufgrund ihrer momentan verfügbaren Leistungen weniger oder gerade so viel Leistung abgeben können, wie ihnen durch die weitere gewichtete Verteilung zugeordnet wurde, wobei deren Sollwerte derart festgelegt werden, dass diese Windenergieanlagen jeweils zur Abgabe ihrer momentan verfügbaren Leistungen angesteuert werden,
g) Wiederholen der Schritte d) bis f) bis eine Abbruchbedingung erfüllt ist,
h) Vorgabe der festgelegten Sollwerte an die jeweiligen Windenergieanlagen des Windparks.

Bei dem erfindungsgemäßen Verfahren werden abhängig von einer Sollleistungsvorgabe für den gesamten Windpark die Ausgabeleistungen der einzelnen Windenergieanlagen geregelt. Es kann also zunächst vorgesehen sein, eine Sollleistung für den Windpark vorzugeben. Die Sollleistung kann dabei dem Windpark bzw. dem Windparkregler als externe Größe, z.B. vom Betreiber des Übertragungsnetzes, in welches der Windpark die Wirkleistung einspeist, vorgegeben werden. Der Windparkregler kann die Größe auch ohne eine externe Sollwertvorgabe ermitteln. Beispielsweise kann der Windparkregler eingerichtet sein, einen Leistungssollwert in Abhängigkeit von der Netzfrequenz, der Netzspannung und/oder einem Leistungsfahrplan zu ermitteln. Die Sollleistung für den Windpark wird kleiner oder gleich der verfügbaren Leistung vorgeben bzw. auf einen solchen Wert begrenzt. Regelungstechnisch kann dies über entsprechende Begrenzer erfolgen. Steht der Windparkregler in bidirektionalem Austausch mit einer dem Regler übergeordnete Netzleitstelle, ist eine Begrenzung i.d.R. dadurch gegeben, dass der Windparkregler die aktuell verfügbare Leistung des Windparks in regelmäßigen Intervallen an die Netzleitstelle übermittelt und diese dem Windpark den externen Sollwert in Abhängigkeit von der gemeldeten verfügbaren Leistung vorgibt. Eine Begrenzung kann auch beim Leistungssollwert in Abhängigkeit von der Netzfrequenz, der Netzspannung und/oder einem Leistungsfahrplan erfolgen. Beispielweise ist es bekannt, einen Windpark innerhalb eines Todbandes um die Netzfrequenz und/oder die Netzspannung mit einer Leistungsbegrenzung unterhalb der verfügbaren Leistung zu betreiben. Verlässt die Netzgröße ihr Todband, kann darauf netzstützend mit der Bereitstellung von Leistung aus der Leistungsreserve reagiert werden. Die Ausgabeleistungen der einzelnen Windenergieanlagen werden geregelt indem diesen Windenergieanlagen - insbesondere den Steuereinheiten der Windenergieanlagen (Windenergieanlagenregler) - Sollwerte vorgegeben werden.

Die Sollwerte sind Sollwerte für eine leistungsbezogene elektrische Größe, was beispielsweise die Leistung selbst sein kann. Die Sollwerte können also Leistungssollwerte sein, insbesondere Sollwerte für die Wirkleistung und/oder die Blindleistung. Die Leistungen müssen jedoch nicht unmittelbar als Sollwerte vorgegeben werden sondern können auch mittelbar vorgegeben werden, beispielsweise als Sollwerte für den Strom oder die Spannung. Die Sollwerte sind zumindest insofern leistungsbezogen, als dass aufgrund dieser Sollwerte die jeweilige Windenergieanlage zur Ausgabe einer gewünschten Leistung veranlasst werden kann. Wenn im Folgenden - zur einfacheren Darstellung - von Leistungen als Sollwerten gesprochen wird, so sind damit nicht nur Leistungssollwerte (Werte mit der Einheit Watt) als solche umfasst sondern auch andere leistungsbezogene Werte gemeint.

Zusammengefasst sieht das erfindungsgemäße Verfahren vor, eine von der für den gesamten Windpark vorgegebenen Sollleistung abhängig von den Minimalleistungen der einzelnen Anlagen zwischen den Anlagen des Windparks zu verteilen. Die Verteilung erfolgt dabei insbesondere für einen gedrosselten Betrieb des Windparks. Die Verteilung erfolgt gewichtet, wobei die Gewichtung nach unterschiedlichen Kriterien erfolgen kann, wie später noch erläutert wird. Durch diese Verteilung ergeben sich zunächst Zwischenwerte, welche aufgrund der momentan verfügbaren Leistungen zumindest einiger der Windenergieanlagen nicht erfüllt werden können. Das bedeutet, dass die verfügbare Leistung einiger Anlagen möglicherweise nicht ausreicht, um die Zwischenwerte zu erreichen. Damit kann auch die gewünschte Sollleistung für den Windpark nicht erreicht werden. Daher werden für eben diese Windenergieanlagen ihre jeweils momentan verfügbaren Leistungen, jedoch zumindest ihre Minimalleistungen als Sollwerte vorgegeben und die Restmenge an Leistung, die durch diese Anlagen nicht abgebildet werden kann, wird auf die Windenergieanlagen mit ausreichend verfügbarer Leistung wiederum gewichtet umgelegt. Die Anlagen, die also mehr leisten können, als gemäß der erfolgten Verteilung vorgesehen, übernehmen die Leistungsabgabe, die die anderen Anlagen nicht darstellen können. Als untere Grenze für die jeweiligen anlagenindividuellen Sollwerte wird dabei die Minimalleistung der jeweiligen Anlage vorgegeben, wie später noch erläutert wird und worin der Vorteil der vorliegenden Erfindung besteht.

Dies erfolgt erfindungsgemäß iterativ. So werden für die verbleibenden Windenergieanlagen weitere (neue) Zwischenwerte bestimmt, welche möglicherweise wiederum aufgrund der momentanen verfügbaren Leistungen zumindest einiger der verbleibenden Windenergieanlagen nicht erfüllt werden können. Für diese verbleibenden Anlagen werden dann wiederum ihre jeweils momentan verfügbaren Leistungen als Sollwerte vorgegeben. Somit werden mit jeder Iteration des Verfahrens weitere Anlagen an ihr Maximum gefahren, erhalten also Sollwerte, die sie zur Ausgabe ihrer momentan verfügbaren Leistungen bringen. Dies wird so lange wiederholt, bis eine Abbruchbedingung erreicht ist, insbesondere bis keine weitere Anlage mehr an ihr Maximum verfahrbar ist, also bis nur noch Windenergieanlagen verbleiben, die jeweils mehr Leistung oder genauso viel abgeben können wie die zuletzt für sie ermittelten Zwischenwerte vorsehen. Dann nämlich verbleiben nur noch solche Windenergieanlagen, die ihren Anteil an der zuletzt erstellten Verteilung erfüllen können (also ihre zuletzt bestimmten weiteren Zwischenwerte erreichen), beziehungsweise die darüber hinaus Leistung bereitstellen können, die von den Anlagen, die bereits an ihr Maximum gefahren wurden, nicht bereitgestellt werden kann. Die dann noch verbleibenden Windenergieanlagen können dann den jeweils für sie ermittelten Zwischenwert als Sollwert erhalten. Somit ist die ursprünglich ermittelte, verteilbare Leistungsmenge vollständig auf die Windenergieanlagen verteilt und damit der Leistungssollwert für den Windpark bzw. insbesondere der gewünschte gedrosselte Betrieb erreicht. Als Abbruchbedingung kann jedoch beispielsweise auch ein Schwellwert für die Leistung vorgesehen sein, wie später noch erläutert wird. Die verbleibende Leistungsdifferenz kann dann basierend auf einer am Netzanschlusspunkt gemessenen Leistung und Bildung einer Regeldifferenz zum angeforderten Parksollwert durch einen Differenzregler (z.B. PID-Regler) ausgeglichen werden.

Erfindungsgemäß werden die Sollwerte zudem derart festgelegt, dass die Windenergieanlagen zumindest zur Abgabe ihrer Minimalleistung angesteuert werden. Es können also insbesondere die mit diesem Verfahren den Windenergieanlagen vorgegebenen Sollwerte die Minimalleistung der jeweiligen Windenergieanlage als untere Grenze aufweisen. Die Minimalleistung einer Windenergieanlage wird vorliegend insbesondere als ein anlagenindividuelles aktuelles minimales Wirkleistungslimit verstanden (engl. "current minimum power limit", CMPL). Als CMPLⱼ wird dabei im Folgenden das CMPL der Anlage j bezeichnet. CMPL gibt für den aktuellen Betriebszustand einer Windenergieanlage an, welche Mindestwirkleistung diese bereitstellen soll. Externe Sollwertvorgaben an die Windenergieanlage sind nur zulässig, wenn diese größer oder gleich CMPL vorgegeben werden. Erhält eine Windenergieanlage Sollwerte unterhalb von CMPL, ist diese bisher entweder auf einen Bruchteil ihrer verfügbaren Leistung limitiert worden, was zu dem zuvor beschriebenen Schwingungsverhalten im Windpark geführt hat, oder die Windenergieanlage wurde abgeschaltet, ohne dass dabei ausgewählte Windenergieanlagen bevorzugt worden sind. Die CMPLⱼ werden kontinuierlich durch die einzelnen Windenergieanlagen an den Windparkregler übermittelt.

Der Begriff sollte so verstanden werden, dass der Wert grundsätzlich von der Konfiguration der Windenergieanlage (=Design), letztlich aber vom aktuellen Betriebszustand und den dabei auftretenden Lasten und Effekten abhängig ist. Dabei kann beispielsweise das Getriebe einer Windenergieanlage die dimensionierende Komponente für die Mindestwirkleistung sein, beispielsweise, wenn darin als Getriebelager Wälzlager eingesetzt werden. Auch andere in der Windenergieanlage eingesetzte Lager, die beispielsweise zur Aufnahme der Hauptwelle der Windenergieanlage eingesetzt werden, können dimensionierend wirken.

Bei Nennbetrieb besitzen Wälzkörper ein in ihren Laufzonen definiertes Verhalten, wobei auf die Wälzkörper eine definierte Radialkraft wirkt. Für ein solches Lager kritische Betriebszustände, die zu Schäden an dem Lager führen können, liegen z.B. dann vor, wenn bei hohen Drehzahlen nur ein eine geringes Drehmoment vorliegt, also nur geringe Leistung eingespeist wird. Die hohe Drehzahl bei geringer Last führt im Wälzlager zu undefinierten Zuständen der Wälzkörper, die als Lagerschlupf bezeichnet werden. Das kann zu einem Abriss des Ölfilms zwischen Wälzkörper und Lagerlaufbahn führen. Als Folge des fehlenden Schmierfilms kommt es zum direkten Kontakt zwischen Wälzkörper und den Lagerlaufbahnen und zu Materialübertrag zwischen Wälzkörpern und Bahn oder Abrieb und über die Zeit zur Beschädigung des Lagers.

Um solche Schädigungen und Kosten durch den Austausch defekter Lager oder Getriebe zu vermeiden, muss bei der Regelung der Windenergieanlage abhängig von der Drehzahl sichergestellt werden, dass die Wälzkörper eine minimale Radialkraft erfahren, damit ein undefinierter Schlupf sicher vermieden werden kann. Das über das Lager übertragene Drehmoment muss folglich nach unten begrenzt werden. Auch Anforderungen hinsichtlich des Vermeidens eines Zahnflankenspiels im Getriebe der Windenergieanlage können limitierend wirken. So können z.B. kurzzeitige Schwankungen des Drehmoments, die z.B. durch Turbulenzen in dem am Rotor der Windenergieanlage angreifenden Wind Schädigungen an den Zahnflanken von Getrieben herbeiführen.

Um kritische Betriebszustände zu kennzeichnen und bei der Regelung der Windenergieanlage zu berücksichtigen, können für die Betriebsführung unterschiedliche Größen als limitierend gewählt werden. Es kann sinnvoll sein, abhängig von der Drehzahl oder der Windgeschwindigkeit, das Drehmoment und damit das Produkt aus Drehmoment und Drehzahl, die Leistung zu begrenzen. Dies berücksichtigt, dass Drehzahl und Drehmoment in der Regel nicht beliebig frei einstellbar sind und der einstellbare Betriebsbereich von der vorliegenden Windgeschwindigkeit abhängig ist. Das aktuelle minimale Wirkleistungslimit kann z.B. auch abhängig von der aktuellen Windrichtung oder auftretenden Turbulenzen vorgegeben werden. Es ist auch möglich, unterschiedliche Größen gleichzeitig zu berücksichtigen. Werden z.B. unterschiedliche Verläufe / Look-Up-Tables für das minimale Wirkleistungslimit in Abhängigkeit von der Windgeschwindigkeit und abhängig von der Windrichtung vorgegeben, lassen sich z.B. bestimmte Ausrichtungsbereiche des Rotors bezüglich der Windrichtung bei der Vorgabe des minimalen Wirkleistungslimits berücksichtigen, innerhalb derer mit einem erhöhten Auftreten von Turbulenzen zu rechnen ist.

Das aktuelle minimale Wirkleistungslimit kann beispielsweise in Form eines Look-Up-Tables vorgegeben werden. Auch können gleitende Mittelwerte solcher Größen herangezogen werden, beispielsweise der 10-Minuten-Mittelwert der Windgeschwindigkeit. Es ist auch denkbar, Windgeschwindigkeitsbereiche vorzugeben, in denen über unterschiedlich lange Zeitdauern gemittelt wird. Auch können Look-Up-Tables in Abhängigkeit vom Betriebsmodus der Windenergieanlage vorgegeben sein. Beispielsweise kann es für einen Betriebsmodus, bei dem eine Drehzahlreserve (engl. "Spinning Reserve") durch einzelnen Windenergieanlagen des Windparks vorgehalten werden soll, die Windenergieanlagen also bei einer gegenüber einem aerodynamisch optimaleren Drehzahlbereich höheren Drehzahl betrieben werden, um kurzfristig und kurzzeitig eine zusätzliche Regelleistung einspeisen zu können, sinnvoll sein, das aktuelle minimale Wirkleistungslimit der beteiligten Windenergieanlagen anzupassen. Die Berücksichtigung des aktuellen minimalen Wirkleistungslimits führt zu einer Reduzierung der Abnutzung der Komponenten der Windenergieanlage.

Die Minimalleistungen (CMPL) hängen also zwar grundsätzlich von der Auslegung der jeweiligen Windenergieanlagen, also von deren Design ab, können jedoch auch dynamische Größen sein und beispielsweise abhängig vom Betriebszustand der jeweiligen Anlage sein, insbesondere von der aktuellen Windgeschwindigkeit und/oder von der Drehzahl. Nach einer Ausgestaltung können die Minimalleistungen (CMPLⱼ) der Windenergieanlagen abhängig von der Windgeschwindigkeit und/oder der Drehzahl vorgegeben sein. Insbesondere bei sehr inhomogenen Windverhältnissen über das Areal eines Windparks kann es vorkommen, dass die momentan verfügbare Leistung einer oder mehrerer der Windenergieanlagen kleiner ist als ihre jeweilige Minimalleistung (und kleiner als der gemäß der Verteilung zugeordnete Anteil). Auch diese Windenergieanlagen werden jedoch erfindungsgemäß zur Abgabe ihrer Minimalleistungen angesteuert, erhalten also insbesondere ihren jeweiligen Minimalleistungswert als Sollwertvorgabe, gleich wenn sie diesen aufgrund der geringeren Verfügbaren Leistung nicht erreichen können. Es ist also vorgesehen, dass auch die Windenergieanlagen, die aufgrund ihrer momentan verfügbaren Leistung nicht nur weniger oder gerade so viel Leistung abgeben können, wie ihnen durch die gewichtete Verteilung zugeordnet wurde, sondern die aufgrund ihrer momentan verfügbaren Leistung auch ihre jeweilige Minimalleistung nicht erreichen, zur Abgabe ihrer Minimalleistungen angesteuert werden. Auch wenn diese Anlagen ihre Minimalleistung nicht tatsächlich ausgeben können, tragen sie doch zur Gesamtleistungsausgabe des Windparks bei.

Würden diese Anlagen bei Unterschreiten ihrer jeweiligen Minimalleistungen nicht mehr für das Verfahren berücksichtigt, würden diese Anlagen insbesondere keine Produktionsfreigabe erhalten, könnte es zu unvorteilhaften Steuerungseffekten kommen. Wie eingangs erläutert, kann es so zu häufigen Abschaltvorgängen von Windenergieanlagen und zu ständig wechselnden Sollwerten für jede der Windenergieanlagen innerhalb des Windparks kommen, was bei ungünstigen Windverhältnissen die Windenergieanlagen in eine gekoppelte Schwingung versetzen kann. Dies liegt daran, dass eine Erteilung der Produktionsfreigabe somit abhängig von den Windverhältnissen und damit von der verfügbaren Leistung wäre. Die Windverhältnisse sind jedoch nicht exakt vorhersagbar und somit wäre ebenfalls nicht vorhersagbar, welche Anlagen im Windpark, die zum aktuellen Zeitpunkt eine Produktionsfreigabe besitzen, im nächsten Moment noch immer eine Produktionsfreigabe erhalten. Durch das erfindungsgemäße Festlegen der Sollwerte zumindest auf die jeweilige Minimalleistung kann dies verhindert werden, insbesondere bleiben alle Anlagen zunächst zugeschaltet. Eine hierdurch eventuell verbleibende Restmenge an Leistung kann ebenfalls auf die verbleibenden Anlagen umgelegt werden, wie später noch erläutert wird.

Die einzelnen Schritte des erfindungsgemäßen Verfahrens werden im Folgenden, teilweise gemeinsam mit möglichen Ausgestaltungen, im Detail erläutert.

Erfindungsgemäß wird zunächst in Schritt a) eine Leistungsmenge ermittelt, die auf die Windenergieanlagen des Windparks zu verteilen ist. Es handelt sich also um eine Sollleistungsmenge. Diese verteilbare Leistungsmenge berücksichtigt dabei, welche Sollleistung für den gesamten Windpark vorgegeben wurde sowie welche Minimalleistungen die einzelnen Windenergieanlagen aufweisen. Nach einer Ausgestaltung wird die auf die Windenergieanlagen verteilbare Leistungsmenge (im folgenden auch Residuum genannt) als Abweichung aus der Sollleistung für den gesamten Windpark und den Minimalleistungen aller Windenergieanlagen ermittelt, insbesondere als Differenz aus der Sollleistung und der Summe der Minimalleistungen. Es gilt also insbesondere SPₚ - Σₖ CMPLₖ für die Abweichung, wobei SPₚ die Sollleistung des Windparksund Σₖ CMPLₖ die Summe über die Minimalleistungen CMPLⱼ aller an den Verfahren teilnehmenden *k* Windenergieanlagen bezeichnen. Der Windpark bestehe dabei aus *n* > 0 Windenergieanlagen, es sei *j, k* ∈ {1..n}. In anderen Worten werden die CMPL von *k* Anlagen des Parks summiert. Es kann insbesondere über alle Anlagen summiert werden, k = n. Für die verteilbare Leistungsmenge wird also insbesondere für jede der Windenergieanlagen nur die Leistungsmenge berücksichtigt, die die Minimalleistung dieser Anlage übersteigt. Die Minimalleistungen der Windenergieanlagen sollen nicht Gegenstand der Verteilung sein sondern sollen vielmehr für jede der am Verfahren teilnehmenden Windenergieanlagen das Minimum für den jeweiligen Sollwert bilden. Erfindungsgemäß erfolgt also die noch zu erläuternde Festlegung der Sollwerte derart, dass jede der Windenergieanlagen zur Abgabe zumindest ihrer Minimalleistung angesteuert wird. Sollte die Summe über alle Minimalleistungen der einzelnen Windenergieanlagen größer sein als der für den Windpark vorgegebene Sollwert, also SPₚ < Σₖ CMPLₖ, so können Windenergieanlagen aus dem Produktionsbetrieb genommen werden. Diese Anlagen haben dann keine Produktionsfreigabe und werden für das erfindungsgemäße Verfahren nicht berücksichtigt. Die Erteilung bzw. das Entziehen von Produktionsfreigaben erfolgt in einem gesonderten Verfahren. Bevorzugt gilt also SPₚ ≥ Σₖ CMPLₖ, das Residuum ist also insbesondere nicht negativ.

Anschließend wird in Schritt b) die ermittelte, verteilbare Leistungsmenge, d.h. das Residuum, auf die an dem Verfahren teilnehmenden Windenergieanlagen rechnerisch verteilt. Dabei wird nach einer Ausgestaltung die gewichtete Verteilung durch Bestimmen von Zwischenwerten als Summe aus der jeweiligen Minimalleistung und der mit einem Gewichtungsfaktor multiplizierten Abweichung erstellt. Es gilt also insbesondere V2SPⱼ = CMPLⱼ + gⱼ ^{∗} (SPₚ - Σₖ CMPLₖ), wobei gⱼ den Gewichtungsfaktor, CMPLⱼ die Minimalleistung und V2SPⱼ den Zwischenwert für die Anlage j ∈ {1..n} bezeichnen. Einige geeignete Gewichtungsfaktoren werden später noch erläutert. Durch diese gewichtete Verteilung wird jeder der Windenergieanlagen ein Anteil an der verteilbaren Leistungsmenge zugeordnet. Diesen Anteil kann jedoch nicht unbedingt jede der Windenergieanlagen aufbringen.

Dafür können möglicherweise einige der Anlagen mehr Leistung aufbringen als zugeteilt.

Daher wird anschließend ermittelt, welche der Windenergieanlagen den ihr zugewiesenen Anteil an der Leistungsmenge aufbringen können. Die Windenergieanlagen, die dies nicht können oder diese Leistungsmenge gerade eben so erreichen, sollen ihren maximalen Output liefern. Diese Anlagen erhalten daher in Schritt c) einen Sollwert, der zur Abgabe der momentan verfügbaren Leistung führt. Sofern Anlagen Produktionsfreigaben erteilt werden, deren momentan verfügbare Leistung ihre Minimalleistung unterschreitet, erhalten diese Anlagen hingegen ihre jeweilige Minimalleistung (CMPL) als Sollwert. Diese Anlagen werden also zur Abgabe ihrer Minimalleistung angesteuert, auch wenn sie diese Leistung nicht tatsächlich ausgeben können. Die dadurch verbleibende Restleistungsmenge kann für die Bestimmung des im Weiteren zu verteilenden Residuums berücksichtigt werden. Wird die verbleibende Restleistungsmenge zur Ermittlung des im Weiteren zu verteilenden Residuums nicht berücksichtigt, so wird (auch bei einem schließlich verschwindendem Residuum) der Sollleistung für den Windpark nicht erreicht werden. Diese Restleistungsmenge kann dann durch einen geeigneten Differenzregler (z.B. PID-Regler) ausgeglichen werden. In anderen Worten erhalten die Windenergieanlagen in diesem Schritt entweder ihre momentan verfügbare Leistung oder ihre Minimalleistung als Sollwert, je nachdem welcher Wert größer ist. Die momentan verfügbare Leistung einer Windenergieanlage bezeichnet hierbei den maximal möglichen Leistungswert, den diese Anlage aufgrund des zu diesem Zeitpunkt bestehenden Betriebszustands bereitstellen kann. Die momentan verfügbare Leistung ist vom Betriebszustand der Anlage abhängig, beispielsweise von der an der Anlage vorliegenden Windgeschwindigkeit. Insbesondere kann für die Windenergieanlagen, für die der zuvor bestimmte Zwischenwert V2SP_{j∗} größer oder gleich ihrer momentan verfügbaren Leistung PA_{j∗} ist, für die also gilt V2SP_{j∗} ≥ PA_{j∗}, die jeweils an diesen Windenergieanlagen momentan verfügbare Leistung PA_{j∗} als Sollwert festgelegt werden. Diese Anlagen tragen dann zumindest ihr Möglichstes zu der Gesamtleistung des Windparks bei. Es verbleibt somit üblicherweise eine Leistungsmenge, die gemäß der gewichteten Verteilung zwar für diese Anlagen vorgesehen war, aber nicht von diesen bereitgestellt werden kann. Sollten jedoch alle an dem Verfahren teilnehmenden Windenergieanlagen ihren zugeordneten Anteil gerade so aufbringen können oder auch noch mehr leisten können, sollte also für alle Anlagen V2SP_{j∗} ≤ PA_{j∗} gelten, kann das Verfahren bereits hier enden (es wird die in dem später noch erläuterten Schritt g) enthaltene Abbruchbedingung erreicht). Dann werden allen Anlagen über ihre Sollwerte zur Ausgabe ihres zugewiesenen Anteils an der gewichteten Verteilung gebracht.

Im Verfahrensschritt d) wird anschließend die erwähnte, verbleibende Leistungsmenge ermittelt, die von den Windenergieanlagen mit momentan verfügbaren Leistungen kleiner oder gleich ihrem jeweiligen Zwischenwert nicht abgebildet werden können. Die verbleibende Leistungsmenge ist somit eine Teilmenge der zuvor ermittelten Leistungsmenge. Dabei wird nach einer Ausgestaltung die verbleibende, noch zu verteilende Leistungsmenge ermittelt als eine weitere Abweichung, nämlich der Abweichung der momentan verfügbaren Leistungen zu den zuvor ermittelten Zwischenwerten. Die weitere Abweichung ist also insbesondere die Summe Σ_{k∗} (V2SP_{k∗} - PA_{k∗}) über die Differenzen der Zwischenwerte V2SP_{j∗} und der momentan verfügbaren Leistungen PA_{j∗} der insgesamt k der j Windenergieanlagen, für die der zuvor bestimmte Zwischenwert größer oder gleich der momentan verfügbaren Leistung PA_{j∗} ist. Die verbleibende Leistungsmenge wird im Folgenden auch als weiteres Residuum bezeichnet. Das Sternchen an den Indizes kennzeichnet hierbei, dass es sich um ebendiese Windenergieanlagen handelt, für die der zuvor bestimmte Zwischenwert V2SP_{j∗} größer oder gleich der momentan verfügbaren Leistung PA_{j∗} ist. Dieses verbleibende Leistungsmenge (also das weitere Residuum) Σ_{k∗} (V2SP_{k∗} - PA_{k∗}) wird anschließend gewichtet verteilt. Diese weitere Abweichung kann insbesondere berechnet werden über alle Anlagen mit PAⱼ ≤ V2SPⱼ einschließlich der Anlagen mit PAⱼ < CMPLⱼ. Nach einer Ausgestaltung kann dann die bereits erwähnte verbleibende, noch zu verteilende Restleistungsmenge ermittelt werden als Abweichung (Σ_{k∗} (CMPL_{k∗} - PA_{k∗})) gebildet als Summe über die Differenzen der Minimalleistungswerte (CMPL_{j∗}) und der jeweiligen momentan verfügbaren Leistungen (PA_{j∗}) der Windenergieanlagen, deren momentan verfügbaren Leistungen (PA_{j∗}) kleiner der für die jeweilige Windenergieanlage vorgesehenen Minimalleistung (PA_{j∗} < CMPL_{j∗}) sind. Diese Restleistungsmenge kann, wie erwähnt, gemeinsam mit der Ermittlung der verbleibenden Leistungsmenge (also des Residuums) für die Anlagen mit PAⱼ > CMPLⱼ ermittelt werden.

Wie erwähnt, muss die Restleistungsmenge zur Ermittlung des im Weiteren zu verteilenden Residuums jedoch nicht berücksichtigt werden. Dies kann auch an anderer Stelle des Verfahrens erfolgen, beispielsweise vor oder auch nach Schritt c), insbesondere zwischen Schritt b) und c) oder zwischen Schritt g) und h). Nach einer Ausgestaltung erfolgt in Abhängigkeit der Restleistungsmenge eine Korrektur der verteilbaren Leistungsmenge, insbesondere durch einen Regler. So kann die Restleistungsmenge insbesondere durch einen geeigneten Differenzregler (z.B. PID-Regler) des Windparkreglers ausgeglichen werden. Dieser Regler kann beispielsweise so eingerichtet sein, dass beim Auftreten einer Abweichung zwischen der Sollwertvorgabe für den Windpark und dem gemessenen, erreichten Istwert für die abgegebene Leistung des Windparks für den nächsten Regelzyklus ein erhöhter Sollwert für den Windpark vorgegeben wird. Die Anlagen, die eine zusätzliche Leistung bereitstellen können, werden so sukzessive an ihren verfügbaren Wert gefahren und der Windpark auf den Sollwert eingeregelt.

Es wird in Schritt e) eine weitere gewichtete Verteilung erstellt, die den verbleibenden Windenergieanlagen, die aufgrund ihrer momentan verfügbaren Leistungen mehr Leistung abgeben können, als ihnen durch die vorherige gewichtete Verteilung zugeordnet wurde, jeweils einen Anteil an der verbleibenden Leistungsmenge zuordnet. Dieser Anteil an der verbleibenden Leistungsmenge fällt für die verbleibenden Windenergieanlagen zusätzlich zu der über die vorherige Verteilung bereits zugewiesenen Leistungsmenge an, also insbesondere zusätzlich zu den zuvor ermittelten Zwischenwerten. Entsprechend wird nach einer Ausgestaltung die weitere gewichtete Verteilung erstellt durch Bestimmen weiterer Zwischenwerte V3SP_{j#} als Summe aus den jeweiligen vorherigen Zwischenwerten V2SP_{j#} für diese verbleibenden Anlagen und der mit einem weiteren Gewichtungsfaktor fⱼ multiplizierten weiteren Abweichung Σ_{k∗} (V2SP_{k∗} - PA_{k∗}). Es gilt also für die weiteren Zwischenwerte V3SP_{j#} = V2SP_{j#} + fⱼ ^{∗} Σ_{k∗} (V2SP_{k∗} - PA_{k∗}). Die Raute an den Indices kennzeichnet, dass es sich um die verbleibenden Windenergieanlagen handelt, für die der zuvor bestimmte Zwischenwert V2SP_{j#} größer oder gleich der momentan verfügbaren Leistung PA_{j#} dieser Anlagen ist. Der weitere Gewichtungsfaktor kann insbesondere derselbe sein wie der vorherige Gewichtungsfaktor, es kann also gelten fⱼ = gⱼ. Einige geeignete Gewichtungsfaktoren werden später noch erläutert. Durch diese weitere gewichtete Verteilung wird jeder der verbleibenden Windenergieanlagen ein Anteil an der verbleibenden Leistungsmenge zugeordnet. Auch hier kann es vorkommen, dass nicht jede der verbleibenden Windenergieanlagen ihren Anteil aufbringen kann, andere Windenergieanlagen womöglich aber mehr aufbringen können.

Im anschließenden Schritt f) werden für diejenigen der verbleibenden Windenergieanlagen, die aufgrund ihrer momentan verfügbaren Leistungen weniger oder gerade so viel Leistung abgeben können, wie ihnen durch die weitere gewichtete Verteilung zugeordnet wurde, Sollwerte festgelegt. Diese Sollwerte werden dabei grundsätzlich nach derselben Bedingung festgelegt, wie die unter Schritt c) festgelegten Sollwerte, nun jedoch bezogen auf die weitere gewichtete Verteilung, also insbesondere auf den weiteren Zwischenwert. Es wird also die momentan verfügbare Leistung für diejenigen der verbleibenden Windenergieanlagen als Sollwert festgelegt, die weniger oder gerade so viel Leistung abgeben können, wie ihnen jeweils durch die weitere gewichtete Verteilung zugeordnet wurde. Auch hier werden keine Sollwerte kleiner den Minimalleistungswerten festgelegt. Nach einer Ausgestaltung wird für diejenigen der verbleibenden Windenergieanlagen, für die der zuvor bestimmte weitere Zwischenwert V3SP_{j#} größer oder gleich ihrer momentan verfügbaren Leistung PA_{j#} ist, die jeweils an diesen Windenergieanlagen momentan verfügbare Leistung PA_{j#} als Sollwert festgelegt. Es gibt folglich weiterhin Windenergieanlagen, die momentan verfügbare Leistungen aufweisen, die größer sind als der weitere Zwischenwert, für die also gilt V3SP_{j#} < PA_{j#}. Somit verbleibt erneut eine zu verteilende Leistungsmenge.

In diesem Fall werden gemäß Schritt g) die Schritte d) bis f) so lange wiederholt, bis eine Abbruchbedingung erfüllt ist. Die Abbruchbedingung kann darin bestehen, dass nur noch Windenergieanlagen verbleiben, die mehr Leistung oder genauso viel abgeben können wie ihnen durch die weitere gewichtete Verteilung zugeordnet wurde, d.h. bis keine Anlagen mehr verbleiben, die weniger Leistung abgeben können, als ihnen durch die vorherige gewichtete Verteilung zugewiesen wurde. In anderen Worten können die Schritte d) bis f) so lange wiederholt werden, bis für alle verbleibenden Anlagen VnSPⱼ ≤ PAⱼ gilt, wobei VnSPj die Zwischenwerte der letzten Iteration sind. Das bedeutet, dass die in der letzten Iteration ermittelten Zwischenwerte durch alle noch verbleibenden Anlagen realisierbar sind, weil diese Anlagen ausreichend verfügbare Leistung aufweisen. Es können dann gemäß Schritt g) für eben diese nach der letzten Iteration noch verbleibenden Windenergieanlagen Sollwerte anhand der letzten der gewichteten Verteilungen festgelegt werden. Dies kann die weitere oder die letzte von mehreren weiteren Verteilungen sein oder auch die ursprüngliche Verteilung (falls bereits in Schritt c) alle Anlagen gerade so viel Leistung abgeben können, wie ihnen durch die Verteilung zugewiesen, wie oben erläutert). Insbesondere werden also dann die nach der letzten Iteration ermittelten Zwischenwerte VnSPⱼ als Sollwerte für diese Anlagen festgelegt. Damit ist die gesamte ursprünglich ermittelte verteilbare Leistungsmenge auf die Anlagen verteilt. Die ursprünglich ermittelte verteilbare Leistungsmenge wird erfindungsgemäß also schrittweise umgelegt auf alle Windenergieanlagen des Windparks. Die maximale Anzahl an Wiederholungen der genannten Schritte entspricht der Anzahl der Windenergieanlagen des Windparks, die am Verfahren teilnehmen, also eine Produktionsfreigabe haben. D.h. selbst bei typischen Windparkgrößen von wenigen bis hin zu mehreren hundert Windenergieanlagen stellt das vorgeschlagene gewichtete Sollwertaufteilungsverfahren keine besondere Herausforderung an eine computergestützte Umsetzung des Verfahrens. Das Verfahren kann jedoch auch früher enden. Sollte bereits nach weniger Wiederholungen allen Anlagen ein Sollwert zugeordnet werden können, kann das Verfahren bereits hier enden. Die verteilbare Leistungsmenge ist dann bereits auf die Windenergieanlagen verteilt.

Nach einer Ausgestaltung ist die Abbruchbedingung erfüllt, wenn die verbleibende Leistungsmenge gleich oder kleiner einem vorgegebenen Schwellwert ist. Es kann also ein Leistungsschwellwert vorgegeben sein, bei dessen Erreichen bzw. Unterschreiten durch die verbleibende, noch zu verteilende Leistungsmenge das Verfahren beendet wird. Es kann akzeptabel sein, die Leistungsmenge nicht vollständig zu verteilen. Auch kann die Abbruchbedingung erfüllt sein, wenn das Verfahren eine vorbestimmte Anzahl von Iterationen durchlaufen hat. Die vorbestimmte Anzahl Iterationen kann insbesondere von den Windverhältnissen abhängig sein. Sollte beispielsweise eine bestimmte Anzahl Iterationen erfahrungsgemäß ausreichend sein für eine vollständige Verteilung der Leistungsmengen, also für das Erreichen der Sollleistung des Windparks, kann das Erreichen dieser Anzahl an Iterationen als Abbruchbedingung definiert werden. Die Restleistungsmenge kann wie bereits beschrieben durch einen geeigneten Differenzregler (z.B. PID-Regler) des Windparkreglers ausgeglichen werden.

Anschließend werden in Schritt h) diese Sollwerte den einzelnen Windenergieanlagen vorgegeben, beispielsweise an die Steuereinheiten der jeweiligen Windenergieanlagen übermittelt. Somit setzen die Windenergieanlagen die Vorgabe um und der Windpark wird in den gedrosselten Betrieb überführt.

Nach einer Ausgestaltung weisen die gewichtete Verteilung und die weitere gewichtete Verteilung dieselbe Gewichtung auf. Nach einer entsprechenden Ausgestaltung sind der erste Gewichtungsfaktor gj und der weitere Gewichtungsfaktor fj identisch. Dies vereinfacht das Berechnungsverfahren.

Nach einer Ausgestaltung ist die Gewichtung der gewichteten Verteilung und/oder der weiteren gewichteten Verteilung abhängig der momentan verfügbaren Leistung der jeweiligen Windenergieanlage, wobei Windenergieanlagen mit einer größeren momentan verfügbaren Leistung stärker gewichtet werden als Windenergieanlagen mit einer kleineren momentan verfügbaren Leistung. So kann der Gewichtungsfaktor insbesondere sein: gⱼ = PAⱼ / (Σₖ PAₖ). Es erfolgt dann also eine Gewichtung der momentan verfügbaren Leistung der jeweiligen Anlage durch die gesamte verfügbare Leistung aller Anlagen. Hierdurch werden letztlich Windenergieanlagen mit einer größeren momentan verfügbaren Leistung stärker gewichtet als Windenergieanlagen mit einer kleineren momentan verfügbaren Leistung, bekommen also einen größeren Anteil an der verteilbaren Leistungsmenge bzw. der verbleibenden Leistungsmenge zugewiesen. Hierdurch kann das Verfahren beschleunigt werden. Zudem können somit insbesondere die Windverhältnisse an den einzelnen Anlagen berücksichtigt werden. Nachteilig an der Verwendung der momentan verfügbaren Leistung der jeweiligen Anlage für die Gewichtung ist, dass sich Wechselwirkungen mit den anderen Windenergieanlagen des Windparks ergeben können, ändert sich die momentan verfügbaren Leistung einer einzelnen Windenergieanlage.

Nach einer besonders bevorzugten Ausgestaltung ist die Gewichtung der gewichteten Verteilung und/oder der weiteren gewichteten Verteilung abhängig von der Abweichung der Nennleistung der jeweiligen Windenergieanlage zu deren Minimalleistung, wobei Windenergieanlagen mit einer kleineren Abweichung stärker gewichtet werden als Windenergieanlagen mit einer größeren Abweichung. So kann der Gewichtungsfaktor insbesondere sein: gⱼ = (PNⱼ - CMPLⱼ) / Σₖ (PNₖ - CMPLₖ), wobei PNⱼ die Nennleistung der Anlage j und PNₖ die Nennleistungen der anderen k produzierenden Anlagen des Windparks bezeichnen. Hierdurch werden Windenergieanlagen mit einer kleineren Abweichung zwischen Nennleistung und Minimalleistung stärker gewichtet als Windenergieanlagen mit einer größeren Abweichung. Anlagen mit einer nahe an ihrer Nennleistung liegenden Minimalleistung werden somit weniger stark gewichtet, bekommen also einen geringeren Anteil an der verteilbaren Leistungsmenge bzw. der verbleibenden Leistungsmenge zugewiesen. Insbesondere erfolgt bei einer derartigen Gewichtung bei einer steigenden Minimalleistung eine immer geringere Gewichtung dieser Anlage. Dies ist insbesondere dann von Vorteil, wenn die Minimalleistungen der Windenergieanlagen nicht fix sondern dynamischen vorgegeben sind bzw. fortlaufend aus den vorliegenden Betriebsbedingungen ermittelt werden. Durch eine schwächere Berücksichtigung von Windenergieanlagen mit einer geringen Differenz PNⱼ - CMPLⱼ lässt sich eine höhere Dynamik bei der Windparkregelung erreichen. Zudem können insbesondere die Anforderungen an ein Abschalten der Windenergieanlagen bei zu hohen Windgeschwindigkeiten berücksichtigt werden.

Nach einer weiteren Ausgestaltung ist die Gewichtung der gewichteten Verteilung und/oder der weiteren gewichteten Verteilung abhängig von der Abweichung der momentan verfügbaren Leistung der jeweiligen Windenergieanlage zu deren Minimalleistung, wobei Windenergieanlagen mit einer kleineren Abweichung stärker gewichtet werden als Windenergieanlagen mit einer größeren Abweichung. So kann der Gewichtungsfaktor insbesondere sein: gⱼ = max(0; (PAⱼ - CMPLⱼ)) / Σk max(0; (PAₖ - CMPLₖ)), wobei wie zuvor PAⱼ die momentan verfügbare Leistung der Anlage j und PAₖ die momentan verfügbaren Leistungen der anderen k produzierenden Anlagen des Windparks bezeichnen. Die Begrenzung auf die nicht negative Halbachse berücksichtigt hierbei die Tatsache, dass möglicherweise Anlagen eine Produktionsfreigabe erteilt wird, die weniger als ihr jeweiliges CMPL an Leistung zur Verfügung haben. Durch diese Gewichtung werden Windenergieanlagen mit einer kleineren Abweichung zwischen momentan verfügbaren Leistung und Minimalleistung (CMPL) stärker gewichtet als Windenergieanlagen mit einer größeren Abweichung. Anlagen mit einer nahe an ihrer momentan verfügbaren Leistung liegenden Minimalleistung werden somit weniger stark gewichtet, bekommen also einen geringeren Anteil an der verteilbaren Leistungsmenge bzw. der verbleibenden Leistungsmenge zugewiesen. Insbesondere erfolgt bei einer derartigen Gewichtung bei einer steigenden Minimalleistung und/oder sinkenden momentan verfügbaren Leistung eine immer geringere Gewichtung dieser Anlage. Auch durch eine schwächere Berücksichtigung der Differenz PAⱼ - CMPLⱼ lässt sich eine höhere Dynamik bei der Windparkregelung erreichen, jedoch ist es auch hier eine Ermessensfrage, die Regelung abhängig von der momentan verfügbaren Leistung vorzunehmen.

Nach einer Ausgestaltung ist die Gewichtung der gewichteten Verteilung und/oder der weiteren gewichteten Verteilung abhängig von der Nennleistung der jeweiligen Windenergieanlage, wobei Windenergieanlagen mit einer größeren Nennleistung stärker gewichtet werden als Windenergieanlagen mit einer kleineren Nennleistung. Somit wird leistungsfähigeren Anlagen ein größerer Anteil an der zu verteilenden Leistungsmenge zugeordnet.

Bei den zuvor beschriebenen Gewichtungsfaktoren werden für die Bildung der jeweiligen Summen im Nenner stets nur die jeweils betroffenen Windenergieanlagen berücksichtigt. Also bezüglich der gewichteten Verteilung insbesondere nur die Windenergieanlagen mit einer Produktionsfreigabe und bezüglich der weiteren gewichteten Verteilung insbesondere nur die Windenergieanlagen, für die die vorherigen jeweiligen Zwischenwerte kleiner als die momentan verfügbare Leistung dieser Anlage sind.

Die Erfindung betrifft zudem einen Windpark mit einer Vielzahl von Windenergieanlagen und mit mindestens einer Steuereinheit, wobei die Steuereinheit dazu ausgebildet ist, das oben erläuterte Verfahren auszuführen. Die zu dem Verfahren gemachten Erläuterungen gelten also entsprechend für den Windpark. Die mindestens eine Steuereinheit kann eine den Windenergieanlagen übergeordnete Steuereinheit sein, insbesondere ein Windparkregler. Die übergeordnete Steuereinheit kann also die Ermittlung der Sollwerte durchführen und diese insbesondere an die Steuereinheiten der einzelnen Anlagen übermitteln. Grundsätzlich können jedoch auch eine oder mehrere der Steuereinheiten der einzelnen Windenergieanlagen zur Ausführung des Verfahrens ausgebildet sein. Die für die Ermittlung der Sollwerte nötigen Größen liegen als Eingangsgrößen zur Durchführung des Verfahrens an der übergeordneten Steuereinheit an. Beispielsweise können die Windenergieanlagen bzw. deren Steuereinheiten eingerichtet sein, in regelmäßigen Abständen aktuell verfügbare Leistungswerte sowie Minimalleistungswerte zu ermitteln und an die übergeordnete Steuereinheit zu übermitteln. Einige Größen können alternativ auch in der übergeordneten Steuereinheit gespeichert sein oder ermittelt werden. Beispielweise können Nennleistungswerte in der übergeordneten Steuereinheit gespeichert sein. Es ist aber auch denkbar, dass die Windenergieanlagen eingerichtet sind, aktuelle Messwerte und Zustandsgrößen in Echtzeit oder annähernd Echtzeit an die übergeordnete Steuereinheit zu übermitteln und dass die Berechnung der für das erfindungsgemäße Verfahren notwendigen Größen in der übergeordneten Steuereinheit erfolgt. Das Verhalten der einzelnen Windenergieanlagen kann dabei auf der zentralen Steuereinheit virtualisiert werden. Entsprechende Lösungen für eine solche Modell- oder Beobachter-basierte Regelung sind aus dem Stand der Technik bekannt und für einen Fachmann auf dem Gebiet der Regelungstechnik ohne Weiteres mit dem Verfahren gemäß der vorliegenden Erfindung zu kombinieren.

Ausgestaltungen der Erfindung werden im Folgenden anhand von Figuren erläutert. Es zeigen schematisch:
- Figur 1: eine Windenergieanlage in seitlicher Ansicht,
- Figur 2: ein schematisches Diagramm der Windenergieanlage aus Fig. 1,
- Figur 3: ein Ablaufdiagramm für das erfindungsgemäße Verfahren, und
- Figur 4: ein Diagramm darstellend mögliche Verläufe für die Minimalleistung und die maximale verfügbare Leistung einer Windenergieanlage aufgetragen über der Windgeschwindigkeit.

Soweit nichts anderes angegeben ist, bezeichnen im Folgenden gleiche Bezugszeichen gleiche Gegenstände.

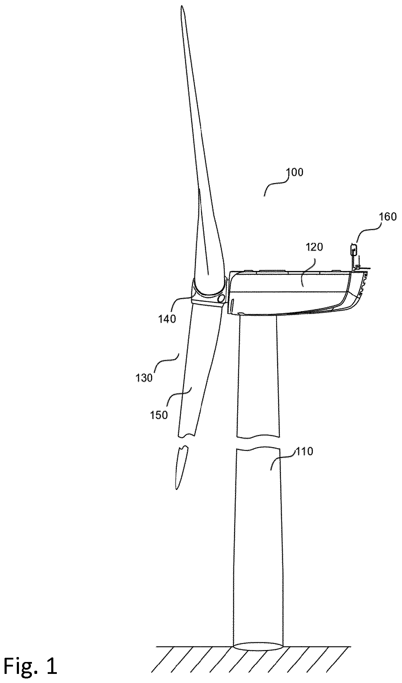

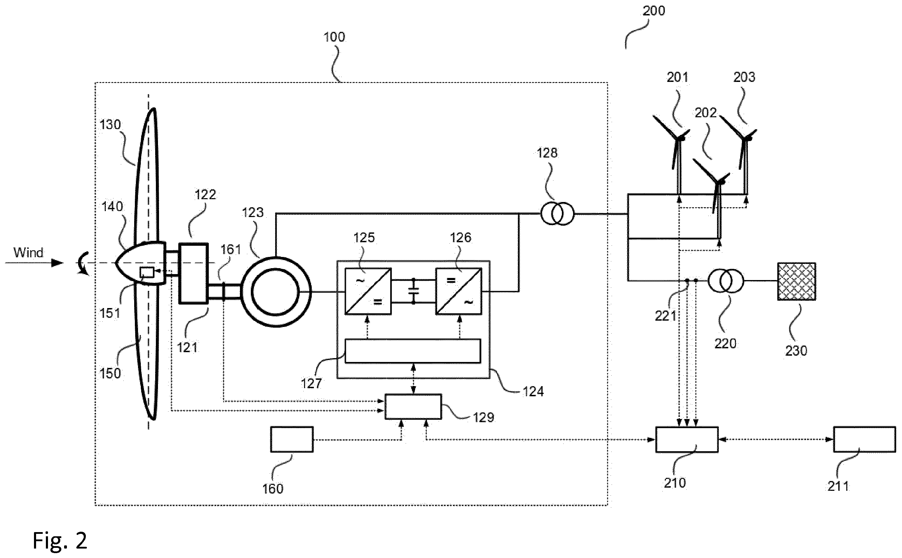

In Figur 1 ist eine Windenergieanlage 100 ersichtlich, umfassend einen Turm 110, eine Gondel 120, ein drehbar an der Gondel angeordneter Rotor 130 mit einer Rotornabe 140 und sich von der Rotornabe 140 forterstreckenden Rotorblättern 150. Auf der Gondel ist zudem ein Anemometer 160 dargestellt. Die Windenergieanlage 100 ist geeignet für das erfindungsgemäße Verfahren und ist insbesondere Teil eines Windparks 200, wie in Figur 2 dargestellt.

Figur 2 zeigt schematisch den elektrischen Aufbau der Windenergieanlage 100. Zudem sind weitere Windenergieanlagen 201, 202, 203 ersichtlich, welche allesamt Teil des Windparks 200 sind. Die Windenergieanlagen 100, 201, 202 und 203 sind über ein windparkinternes dreiphasiges elektrisches Netz und eine Übergabestation 220 mit einem dreiphasigen elektrischen Übertragungsnetz 230 verbunden und können in dieses Leistung einspeisen. Die Übergabestation kann einen Transformator umfassen, der eingerichtet ist, die von dem Windpark abgegebene Leistung von einer Mittelspannung auf eine Hochspannung zu transformieren. Ebenso kann die Windenergieanlage 100 mit einem Transformator 128 versehen und über diesen mit dem windparkinternen Netz verbunden sein.

Der Rotor 130 der Windenergieanlage 100 nimmt ein Drehmoment aus dem Wind auf und leitet dieses über einen Antriebsstrang 121, der ein Getriebe 122 umfasst, an den Rotor eines doppeltgespeisten Asynchrongenerators 123 weiter, welcher eingerichtet ist, die aufgenommene kinetische Energie in elektrische Energie umzuwandeln und das dreiphasige elektrische Übertragungsnetz 230 einzuspeisen. Die Windenergieanlage ist als doppeltgespeiste Asynchronmaschine ausgebildet; der Stator des Generators 123 ist über eine dreiphasige Leitung direkt mit dem dreiphasigen elektrischen Versorgungsnetz 230 verbunden. Der Rotor des Generators 123 ist über eine dreiphasige Leitung mit einem Wechselstrom-Umrichter 124 verbunden. Der Wechselstrom-Umrichter 124 ist netzseitig über eine dreiphasige Leitung mit der Statorleitung und dem elektrischen Versorgungsnetz 230 verbunden. Zur besseren Übersicht werden elektrische Leitungen in der Figur schematisch einphasig dargestellt.

Der Wechselstrom-Umrichter 124 weist einen rotorseitigen Umrichter 125 und einen netzseitigen Umrichter 126 auf. Zwischen den Umrichtern ist ein Gleichstromzwischenkreis vorgesehen. Ein Umrichterregler 127 des Wechselstrom-Umrichters 124 ist dazu eingerichtet, über eine Regelung der Rotorströme in dem Rotor ein Generatormoment an dem Generator 123 einzustellen. Hierzu kann der Umrichterregler 127 dem rotorseitigen Umrichter 125 Stellgrößen, beispielsweise für Rotorströme, Wirk-und Blindleistung und/oder Generatormoment vorgeben. Entsprechende Regelungsverfahren sind aus dem Stand der Technik bekannt. Der rotorseitige Umrichter 125 stellt die Rotorströme und damit das Generatormoment beispielsweise durch die Schaltung von leistungselektronischen Bauelementen ein. Zur Regelung des Generatormoments kommuniziert der Umrichterregler 127 mit einem Windenergieanlagenregler 129, erhält von diesem insbesondere einen Sollwert für ein Generatormoment oder eine abzugebende Wirkleistung.

Die Windenergieanlage 100 weist zudem einen Drehzahlsensor 161 auf. Dieser kann an einer beliebigen Stelle an dem Antriebsstrang 121 vorgesehen sein, beispielsweise an einer Getriebeausgangswelle, die mit dem Rotor des Generators 123 verbunden ist. Von dem Drehzahlsensor 161 gemessene Drehzahlwerte liegen als Eingangsgröße an dem Windenergieanlagenregler 129 an. Auch von dem Anemometer 160 gemessene Windgeschwindigkeitsmesswerte liegen als Eingangsgröße an dem Windenergieanlagenregler 129 an.

Der Windenergieanlagenregler 129 ist weiterhin mit einer Blattwinkelstellvorrichtung 151 verbunden, mittels derer der Windenergieanlagenregler 129 einen Pitchwinkel der Rotorblätter 150 einstellen kann. Der Windenergieanlagenregler 129 dient generell dazu, die Windenergieanlage 100 im Betrieb zu regeln. Die Regelung und der Zusammenhang zwischen Drehzahl, Drehmoment, Leistung, Rotorblatteinstellwinkel und Windgeschwindigkeit folgt in diesem Ausführungsbeispiel für drehzahlvariable Windenergieanlagen aus dem Stand der Technik bekannten Verfahren. Beispielsweise empfängt der Windenergieanlagenregler 129 Signale und Regelungsbefehle von einem Windparkregler 210, mit welchem er über eine Datenleitung kommuniziert. In dem vorliegenden Ausführungsbeispiel ist der Windparkregler 210 als übergeordnete Steuereinheit dazu eingerichtet, das erfindungsgemäße Verfahren auszuführen. Der Windparkregler 210 ist mit einem Sensor 221 verbunden, der eingerichtet ist, elektrische Messgrößen am Netzverknüpfungspunkt des Windparks zu erfassen. Die Messgrößen, beispielsweise zu der von dem Windpark abgegebenen Wirk- und Blindleistung, liegen als Eingangsgrößen an dem Windparkregler 210 an. Auch Messwerte über Ströme oder Spannungen am Netzverknüpfungspunkt können als Eingangsgrößen für die Regelung des Windparks an dem Windparkregler 210 anliegen. Der Windparkregler 210 ist mit einer externen Regelungseinrichtung 211, die beispielsweise vom Netzbetreiber des Übertragungsnetzes 230 vorgehalten wird, über eine Datenleitung verbunden. Der Windparkregler 210 ist eingerichtet, Sollwerte von der externen Regelungseinrichtung 211 zu empfangen und Istwerte an diese zu übermitteln. Beispielsweise kann der Windparkregler 210 eingerichtet sein, der externen Regelungseinrichtung 211 in regelmäßigen Abständen, beispielsweise mit einem Takt von 10 Sekunden, die aktuell verfügbare Wirkleistung mitzuteilen. Die externe Regelungseinrichtung 211 kann eingerichtet sein, in Abhängigkeit von der anliegenden verfügbaren Wirkleistung ein Sollwert für die durch den Windpark abzugebende Wirkleistung zu übermitteln. Alternativ oder ergänzend dazu kann die Vorgabe des Sollwertes auch auf einen geänderten netzseitigen Leistungsbedarf hin erfolgen. Auf analoge Weise kann auch eine Regelung der Blindleistung erfolgen. Eine Leistungsreserve kann beispielsweise durch Einstellen eines Sollwerts unterhalb eines als verfügbar gemeldeten Wertes eingestellt werden. Die externe Regelungseinrichtung 211 kann auch Vorgaben hinsichtlich bestimmter Betriebsweisen machen und dem Windparkregler beispielsweise vorgeben, den Windpark mit einer Drehzahlreserve zu betreiben. Entsprechende Betriebsmodi können auch in dem Windparkregler 210 vorgegeben sein und abhängig von im Windpark oder am Netzverknüpfungspunkt gemessenen Messgrößen eingestellt werden.

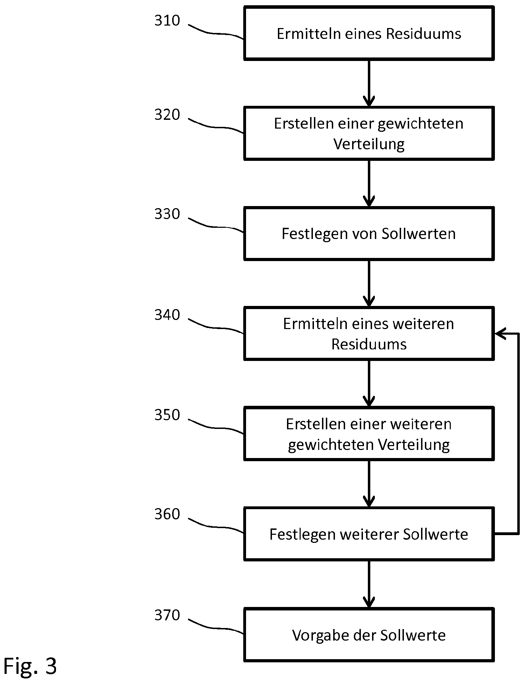

Der Ablauf des erfindungsgemäßen Verfahrens ist in Figur 3 dargestellt. Das dort gezeigte Ausführungsbeispiel umfasst zumindest sieben Schritte 310-370. Der Windparkregler 210 führt das erfindungsgemäße Verfahren beispielsweise dann aus, wenn er von der externe Regelungseinrichtung 211 eine Sollleistungsvorgabe SPₚ für den Windpark erhält. Beispielsweise kann diese Vorgabe einen gedrosselten Betrieb des Windparks verlangen. Um diesen gedrosselten Betrieb zu erreichen, legt der Windparkregler Leistungssollwerte für die Windenergieanlagen wie folgt fest.

Zunächst ermittelt der Windparkregler in Schritt 310 eine auf die Windenergieanlagen zu verteilende Leistungsmenge (Residuum) als Differenz SPₚ - Σₖ CMPLₖ, wobei CMPLⱼ die Minimalleistung der Anlage j und Σₖ CMPLₖ die Summe über die Minimalleistungen aller an dem Verfahren teilnehmenden k Windenergieanlagen bezeichnen. Der Windpark bestehe aus *n* > 0 Windenergieanlagen, es sei j, k ∈ {1..n}. Sollte die Summe über alle Minimalleistungen der einzelnen Windenergieanlagen größer sein als der für den Windpark vorgegebene Sollwert, also SPₚ<Σₖ CMPLₖ, so können Windenergieanlagen aus dem Produktionsbetrieb genommen werden. Diese Anlagen haben dann keine Produktionsfreigabe und werden für das erfindungsgemäße Verfahren nicht berücksichtigt. Es gilt SPₚ≥Σₖ CMPLₖ, das Residuum ist also insbesondere nicht negativ. Das Residuum umfasst nur die Leistungsmenge, die die Windenergieanlagen über ihre Minimalleistungen hinaus bereitstellen können. Das Residuum wird im Weiteren dann auf die Anlagen verteilt.

Hierzu wird in Schritt 320 eine gewichtete Verteilung erstellt, die den einzelnen Windenergieanlagen jeweils einen Anteil an dem Residuum zuordnet. Hierzu werden zunächst Zwischenwerte V2SPⱼ = CMPLⱼ + gⱼ ^{∗} (SPₚ - Σₖ CMPLₖ) erstellt mit gⱼ als Gewichtungsfaktor.

Anschließend erfolgt in Schritt 330 ein erstes Festlegen von Sollwerten. So wird für die Windenergieanlagen, für die der zuvor bestimmte Zwischenwert V2SP_{j∗} größer oder gleich ihrer momentan verfügbaren Leistung PA_{j∗} ist, für die also gilt V2SP_{j∗} ≥ PA_{j∗}, die jeweils an diesen Windenergieanlagen momentan verfügbare Leistung PA_{j∗} als Sollwert festgelegt. Es wird also insbesondere für jede der Windenergieanlagen ermittelt, ob deren jeweils momentan verfügbare Leistungen unterhalb oder oberhalb des für diese Anlage festgelegten Zwischenwerts V2SPⱼ liegen bzw. diesen genau treffen. Diejenigen Anlagen, die ihren Zwischenwert nicht erreichen, erhalten als Sollwert ihre jeweilige momentan verfügbare Leistung. Selbiges gilt für die Anlagen, die ihren Zwischenwert genau treffen - in diesem Fall entspricht der Zwischenwerte gerade der momentan verfügbaren Leistung. Diejenigen Anlagen, deren verfügbare Leistungen ihren Zwischenwert übertreffen, erhalten durch die nachfolgend erläuterten Verfahrensschritte die verbleibende Leistungsmenge. Sollten jedoch alle Anlagen ihre Zwischenwerte erreichen oder übertreffen, so werden diese Zwischenwerte als Sollwerte festgelegt und den Windenergieanlagen vorgegeben. Das Verfahren springt zu Schritt 370. Jede Anlage erhält somit einen Sollwert kleiner oder gleich ihrer momentan verfügbaren Leistung und das Verfahren kann bereits ohne Iteration enden. Dabei erhält jedoch keine der Windenergieanlagen einen Sollwert kleiner ihrer Minimalleistung. Sollte also die momentan verfügbare Leistung einer Anlage ihre Minimalleistung unterschreiten, wird nicht die momentan verfügbare Leistung sondern eben die Minimalleistung als Sollwert vorgegeben. Hierdurch kann, wie bereits erläutert, ein Schwingungsverhalten in der Regelung verhindert werden.

Im Schritt 340 wird nun ein weiteres Residuum ermittelt, nämlich die verbleibende Leistungsmenge, welche durch die Anlagen, die im vorherigen Schritt bereits einen Sollwert erhalten haben, nicht realisiert werden kann. Dieses weitere Residuum ist insbesondere die Summe Σ_{k∗} (V2SP_{k∗} - PA_{k∗}) über die Differenzen der Zwischenwerte V2SP_{j∗} und der momentan verfügbaren Leistungen PA_{j∗} der insgesamt k^{∗} Windenergieanlagen, für die der zuvor bestimmte Zwischenwert größer oder gleich der momentan verfügbaren Leistung PA_{j∗} ist. Auch eine Restleistungsmenge Σ_{k∗} (CMPL_{k∗} - PA_{k∗}) der Anlagen mit momentan verfügbarer Leistung unterhalb ihrer Minimalleistung kann hierüber das Residuum abgebildet werden. Alternativ kann diese Restleistungsmenge aufgrund einer Messung am Netzanschlusspunkt und Bildung einer Regeldifferenz zum angeforderten Parksollwert durch einen Differenzregler (z.B. PID-Regler) ausgeglichen werden.

Das weitere Residuum wird anschließend in Schritt 350 mit einer weiteren gewichteten Verteilung auf die verbleibenden Anlagen verteilt, also auf die Anlagen für die gilt: V2SP_{j∗} < PA_{j∗}. Diese verbleibenden Anlagen sollen also zusätzlich zu den zuvor ermittelten Zwischenwerten auch ihren Anteil am weiteren Residuum abbilden. Es werden also weitere Zwischenwerte V3SP_{j#} ermittelt mit V3SP_{j#} = V2SP_{j#} + fⱼ ^{∗} Σ_{k∗} (V2SP_{k∗} - PA_{k∗}) mit dem Gewichtungsfaktor fⱼ, wobei vorliegend gⱼ = fⱼ gilt. Die Gewichtungsfaktoren sind hierbei bevorzugt gⱼ = fⱼ = (PNⱼ - CMPLⱼ) / Σₖ (PNₖ - CMPLₖ), wobei PNⱼ die Nennleistung der Anlage j und PNₖ die Nennleistungen der anderen k produzierenden Anlagen des Windparks bezeichnen. Hierdurch werden Windenergieanlagen mit einer kleineren Abweichung zwischen Nennleistung und Minimalleistung stärker gewichtet als Windenergieanlagen mit einer größeren Abweichung. Anlagen mit einer nahe an ihrer Nennleistung liegenden Minimalleistung werden somit weniger stark gewichtet, bekommen also einen geringeren Anteil an der verteilbaren Leistungsmenge bzw. der verbleibenden Leistungsmenge zugewiesen. Insbesondere erfolgt bei einer derartigen Gewichtung bei einer steigenden Minimalleistung eine immer geringere Gewichtung dieser Anlage. Dies ist insbesondere dann von Vorteil, wenn die Minimalleistungen der Windenergieanlagen nicht fix sondern dynamischen vorgegeben sind bzw. fortlaufend aus den vorliegenden Betriebsbedingungen ermittelt werden. Durch eine schwächere Berücksichtigung von Windenergieanlagen mit einer geringen Differenz PNⱼ - CMPLⱼ lässt sich eine höhere Dynamik bei der Windparkregelung erreichen. Zudem können insbesondere die Anforderungen an ein Abschalten der Windenergieanlagen bei zu hohen Windgeschwindigkeiten berücksichtigt werden.

Im Schritt 360 wird für die Windenergieanlagen, für die der zuvor bestimmte weitere Zwischenwert V3SP_{j#} größer oder gleich ihrer momentan verfügbaren Leistung PA_{j#} ist, für die also gilt V3SP_{j#} ≥ PA_{j#}, die jeweils an diesen Windenergieanlagen momentan verfügbare Leistung PA_{j#} als Sollwert festgelegt. Sollte für keine der verbleibenden Windenergieanlagen der zuvor bestimmte weitere Zwischenwert V3SP_{j#} größer oder gleich ihrer momentan verfügbaren Leistung PA_{j#} sein, gilt also für alle verbleibenden Anlagen V3SP_{j#} < PA_{j#}, werden jeweils die Zwischenwerte V3SP_{j#} als Sollwerte für diese verbleibenden Anlagen festgelegt. Somit kann die noch zu verteilende Leistungsmenge auf die verbleibenden Anlagen verteilt werden, da deren verfügbare Leistungen ausreichend sind. Dann werden gemäß Schritt 370 alle in den vorherigen Schritten festgelegten Sollwerte an die Steuereinheiten der einzelnen Windenergieanlagen, also vorliegend u.a. an den Windenergieanlagenregler 129, übermittelt. Andernfalls (sollte also nicht für alle Anlagen V3SP_{j#} ≤ PA_{j#} gelten) setzt das Verfahren bei Schritt 340 wieder fort, wie durch den rückläufigen Pfeil in Fig. 3 angedeutet. Es wird dann wieder ein weiteres Residuum ermittelt, eine weitere gewichtete Verteilung erstellt und schließlich erneut Zwischenwerte ermittelt, die den nunmehr verbleibenden Anlagen als Sollwerte vorgegeben werden sofern nun jede der Windenergieanlagen einen Zwischenwert kleiner oder gleich ihrer verfügbaren Leistung aufweist. Ansonsten kann das Verfahren immer wieder bei Schritt 340 einsetzen, bis dies der Fall ist.

Durch das erfindungsgemäße Verfahren erfolgt in einfacher und zuverlässiger Weise eine Regelung der Anlagen eines Windparks auf einen vorgegebenen Sollwert für den Windpark. Es werden dabei die Minimalleistungen der einzelnen Anlagen berücksichtigt, bilden insbesondere Minimalwerte für die Sollwerte. Anlagen, für die die momentan verfügbare Leistung unterhalb der Minimalleistung liegt, erhalten als Sollwert ihre Minimalleistung anstatt ihrer momentan verfügbaren Leistung. Es kann somit nicht zu unerwünschten Zu- und Abschaltvorgängen von Windenergieanlagen kommen, deren momentan verfügbaren Leistungen mal oberhalb, mal unterhalb ihrer Minimalleistung liegen. Aufgrund der Berücksichtigung der Minimalleistungswerte kann somit insbesondere das Entstehen der eingangs erwähnten gekoppelten Schwingung verhindert werden.

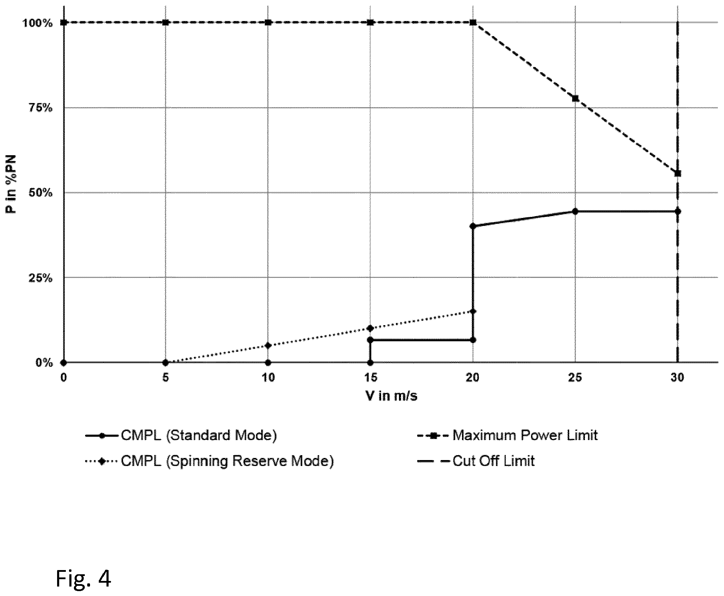

Die Minimalleistungen hängen grundsätzlich von der Auslegung der jeweiligen Windenergieanlagen, also von deren Design ab. Die Minimalleistungen können jedoch auch dynamische Größen sein und beispielsweise abhängig vom Betriebszustand der jeweiligen Anlage sein, insbesondere von der Windgeschwindigkeit. Figur 4 zeigt die Abhängigkeit der aktuellen Minimalleistung CMPL von der Windgeschwindigkeit für zwei unterschiedliche Betriebsmodi einer Windenergieanlage, die eine Nennleistung im Megawattbereich aufweist. Hierbei ist die Wirkleistung P einer Windenergieanlage relativ zu ihrer Nennleistung PN über der Windgeschwindigkeit v aufgetragen. In einem Standardbetriebsmodus (durchgehende Linie mit kreisförmigen Punkten) steigt die Minimalleistung CMPL bei einer Windgeschwindigkeit von 15 m/s sprunghaft über den Wert von 0% der Nennleistung. Zwischen 20 m/s und 25 m/s wird die Minimalleistung linear mit der Windgeschwindigkeit ansteigend vorgegeben. Zwischen 25 m/s und 30 m/s Windgeschwindigkeit erfolgt keine weitere Erhöhung der Minimalleistung.

In einem eine Drehzahlreserve vorhaltenden Betriebsmodus (gestrichelte Linie mit rautenförmigen Punkten) steigt die Minimalleistung CMPL beginnend bei einer Windgeschwindigkeit von 5 m/s linear an. Zwischen 20 m/s und 30 m/s sieht der eine Drehzahlreserve vorhaltende Betriebsmodus den gleichen Verlauf für die Minimalleistung vor, wie sie für den Standardbetriebsmodus vorgesehen ist. Insofern überdecken sich in diesem Intervall die Verläufe der durchgehenden Linie mit kreisförmigen Punkten und der gestrichelte Linie mit rautenförmigen Punkten. Grundsätzlich ist aber auch ein gänzlich anderer Verlauf denkbar. Ein Betrieb unter Vorhaltung einer Drehzahlreserve kann auch oberhalb von 20 m/s möglich sein. Bei 30 m/s stellt eine senkrechte Linie den Abschaltgrenzwert für die Anlage dar, bei dessen Erreichen die Windenergieanlage abschaltet. Dies wird auch "Cut-Off-Limit" oder "Storm-Cut-Off" genannt. Beginnend bei einer Windgeschwindigkeit von 20 m/s bis hin zu dem Abschaltgrenzwert bei 30 m/s erfolgt ein lineares Absenken eines oberen Leistungsgrenzwerts der Anlage, wie anhand der gestrichelten Linie mit quadratischen Punkten zu ersehen. Durch Vorgabe dieses Wertes wird die verfügbare Leistung der Windenergieanlage von oben begrenzt, gleich wenn die Windenergieanlage eine Windgeschwindigkeit erfährt, die oberhalb ihrer Nennwindgeschwindigkeit, also jener Windgeschwindigkeit liegt, ab der die Anlage ihre Nennleistung einspeisen könnte, liegt. Die Absenkung wird auch "Soft-Cut-Out" oder "Storm-Fade-Out" genannt. Die Absenkung kann auch stufenweise oder nichtlinear erfolgen. Beispielsweise kann hierfür eine Drehzahl des Rotors 130 der Windenergieanlage 100 durch Änderung des Pitchwinkels reduziert werden.

Das erfindungsgemäße Verfahren kann diese veränderlichen Minimalleistungen für die Regelung der Leistungsabgabe der Windenergieanlagen berücksichtigen. So werden unter Umständen Windenergieanlagen mit einer momentan verfügbaren Leistung kleiner als ihrer Minimalleistung gar nicht erst für das Verfahren berücksichtigt, da ihnen im Vorfeld gegebenenfalls keine Produktionsfreigabe erteilt wird. Zum anderen gibt das erfindungsgemäße Verfahren den Anlagen keine Sollwerte vor, die unterhalb der Minimalleistungen liegen.

### Bezugszeichenliste

- 100: Windenergieanlage
- 110: Turm
- 120: Gondel
- 130: Rotor
- 140: Rotornabe
- 150: Rotorblatt
- 160: Anemometer
- 200: Windpark
- 201, 202, 203: Windenergieanlage
- 210: zentraler Windparkregler
- 211: externe Regelungseinrichtung (Netzbetreiber)
- 220: Übertragungsstation
- 221: Sensoreinheit
- 230: elektrisches Übertragungsnetz
- 121: Antrieb strang
- 122: Getriebe
- 123: Generator
- 124: Umrichter
- 125: rotorseitiger Umrichter
- 126: netzseitiger Umrichter
- 127: Umrichterregler
- 128: Transformator
- 129: Windenergieanlagenregler
- 151: Rotorblattwinkelverstelleinrichtung
- 161: Drehzahlsensor
- n: Anzahl der Windenergieanlage des Windparks mit Produktionsfreigabe
- SPⱼ: Wirkleistungssollwert der Windenergieanlage j
- PAⱼ: momentan verfügbare Wirkleistung der Windenergieanlage j
- CMPLⱼ: momentane minimal bereitstellbare Leistung der Windenergieanlage j
- PNⱼ: Nennleistung der Windenergieanlage j
- SPₚ: Sollwert für die durch den Windpark am Netzverknüpfungspunkt einzuspeisende Wirkleistung

## Patentansprüche

1. Verfahren zum Betreiben eines Windparks mit einer Vielzahl von Windenergieanlagen, die ansprechend auf einen empfangenen Sollwert einer leistungsbezogenen elektrischen Größe zur Abgabe einer Leistung ansteuerbar und/oder einregelbar sind, wobei das Verfahren folgende Schritte aufweist:
a) Ermitteln einer auf die Windenergieanlagen verteilbaren Leistungsmenge abhängig von einer Sollleistung für den gesamten Windpark und von Minimalleistungen der einzelnen Windenergieanlagen,
b) Erstellen einer gewichteten Verteilung, die den einzelnen Windenergieanlagen jeweils einen Anteil an der verteilbaren Leistungsmenge zuordnet,
c) Festlegen von Sollwerten für die Windenergieanlagen, die aufgrund ihrer momentan verfügbaren Leistungen weniger oder gerade so viel Leistung abgeben können, wie ihnen durch die gewichtete Verteilung zugeordnet wurde, wobei deren Sollwerte derart festgelegt werden, dass diese Windenergieanlagen jeweils zur Abgabe ihrer momentan verfügbaren Leistungen jedoch zumindest zur Abgabe ihrer Minimalleistungen angesteuert werden,
d) Ermitteln einer verbleibenden, noch zu verteilenden Leistungsmenge,
e) Erstellen einer weiteren gewichteten Verteilung, die den verbleibenden Windenergieanlagen, die aufgrund ihrer momentan verfügbaren Leistungen mehr Leistung abgeben können, als ihnen durch die vorherige gewichtete Verteilung zugeordnet wurde, jeweils einen Anteil an der verbleibenden Leistungsmenge zuordnet,
f) Festlegen von Sollwerten für diejenigen der verbleibenden Windenergieanlagen, die aufgrund ihrer momentan verfügbaren Leistungen weniger oder gerade so viel Leistung abgeben können, wie ihnen durch die weitere gewichtete Verteilung zugeordnet wurde, wobei deren Sollwerte derart festgelegt werden, dass diese Windenergieanlagen jeweils zur Abgabe ihrer momentan verfügbaren Leistungen angesteuert werden,
g) Wiederholen der Schritte d) bis f) bis eine Abbruchbedingung erfüllt ist,
h) Vorgabe der festgelegten Sollwerte an die jeweiligen Windenergieanlagen des Windparks.

2. Verfahren nach Anspruch 1, **dadurch gekennzeichnet, dass** die auf die Windenergieanlagen verteilbare Leistungsmenge gemäß Schritt a) als Abweichung (SPₚ - Σₖ CMPLₖ) aus der Sollleistung für den gesamten Windpark (SPₚ) und den Minimalleistungen (CMPLⱼ) aller Windenergieanlagen (Σₖ CMPLₖ) ermittelt wird.

3. Verfahren nach Anspruch 1 oder 2, **dadurch gekennzeichnet, dass** die gewichtete Verteilung gemäß Schritt b) erstellt wird durch Bestimmen von Zwischenwerten (V2SPⱼ) als Summe aus der jeweiligen Minimalleistung (CMPLⱼ) und der mit einem Gewichtungsfaktor (gⱼ) multiplizierten Abweichung (SPₚ - Σₖ CMPLₖ).

4. Verfahren nach einem der vorhergehenden Ansprüche, **dadurch gekennzeichnet, dass** gemäß Schritt c), für die Windenergieanlagen, für die der zuvor bestimmte Zwischenwert (V2SP_{j∗}) größer oder gleich ihrer momentan verfügbaren Leistung (PA_{j∗}) ist, die jeweils an diesen Windenergieanlagen momentan verfügbare Leistung (PA_{j∗}) jedoch zumindest ihre jeweilige Minimalleistung (CMPL_{j∗}) als Sollwert festgelegt wird.

5. Verfahren nach einem der vorhergehenden Ansprüche, **dadurch gekennzeichnet, dass** gemäß Schritt d), die verbleibende, noch zu verteilende Leistungsmenge ermittelt wird als weitere Abweichung (Σ_{k∗} (V2SP_{k∗} - PA_{k∗})) gebildet als Summe über die Differenzen der jeweiligen Zwischenwerte (V2SP_{j∗}) und der jeweiligen momentan verfügbaren Leistungen (PA_{j∗}) der Windenergieanlagen, für die der zuvor bestimmte Zwischenwert (V2SP_{j∗}) größer oder gleich der momentan verfügbaren Leistung (PA_{j∗}) ist.

6. Verfahren nach einem der vorhergehenden Ansprüche, **dadurch gekennzeichnet, dass** eine verbleibende, noch zu verteilende Restleistungsmenge ermittelt wird als Abweichung (Σ_{k∗} (CMPL_{k∗} - PA_{k∗})) gebildet als Summe über die Differenzen der Minimalleistungswerte (CMPL_{j∗}) und der jeweiligen momentan verfügbaren Leistungen (PA_{j∗}) der Windenergieanlagen, deren momentan verfügbaren Leistungen (PA_{j∗}) kleiner der für die jeweilige Windenergieanlage vorgesehenen Minimalleistung (PA_{j∗} < CMPL_{j∗}) sind.

7. Verfahren nach Anspruch 6, **dadurch gekennzeichnet, dass** in Abhängigkeit der Restleistungsmenge eine Korrektur der verteilbaren Leistungsmenge erfolgt, insbesondere durch einen Regler.

8. Verfahren nach einem der vorhergehenden Ansprüche, **dadurch gekennzeichnet, dass** gemäß Schritt e), die weitere gewichtete Verteilung erstellt wird durch Bestimmen weiterer Zwischenwerte (V3SP_{j#}) als Summe aus den jeweiligen vorherigen Zwischenwerten (V2SP_{j#}) und der mit einem weiteren Gewichtungsfaktor (fⱼ) multiplizierten weiteren Abweichung (Σₖ (V2SP_{k∗} - PA_{k∗})).

9. Verfahren nach einem der vorhergehenden Ansprüche, **dadurch gekennzeichnet, dass** gemäß Schritt f), für diejenigen der verbleibenden Windenergieanlagen, für die der zuvor bestimmte weitere Zwischenwert (V3SP_{j#}) größer oder gleich ihrer momentan verfügbaren Leistung (PA_{j#}) ist, die jeweils an diesen Windenergieanlagen momentan verfügbare Leistung (PA_{j#}) als Sollwert festgelegt wird.

10. Verfahren nach einem der vorhergehenden Ansprüche, **dadurch gekennzeichnet, dass** die Abbruchbedingung erfüllt ist, wenn die verbleibende Leistungsmenge gleich oder kleiner einem vorgegebenen Schwellwert ist, und/oder wenn das Verfahren eine vorbestimmte Anzahl von Iterationen durchlaufen hat, wobei die vorbestimmte Anzahl Iterationen insbesondere von den Windverhältnissen abhängig ist.

11. Verfahren nach einem der vorhergehenden Ansprüche, **dadurch gekennzeichnet, dass** die gewichtete Verteilung und die weitere gewichtete Verteilung dieselbe Gewichtung aufweisen und/oder dass der erste Gewichtungsfaktor (gⱼ) und der weitere Gewichtungsfaktor (fⱼ) derselbe sind.

12. Verfahren nach einem der vorhergehenden Ansprüche, **dadurch gekennzeichnet, dass** die Gewichtung der gewichteten Verteilung und/oder der weiteren gewichteten Verteilung abhängig der momentan verfügbaren Leistung der jeweiligen Windenergieanlage erfolgt, wobei Windenergieanlagen mit einer größeren momentan verfügbaren Leistung stärker gewichtet werden als Windenergieanlagen mit einer kleineren momentan verfügbaren Leistung.

13. Verfahren nach einem der vorhergehenden Ansprüche, **dadurch gekennzeichnet, dass** die Gewichtung der gewichteten Verteilung und/oder der weiteren gewichteten Verteilung abhängig von der Abweichung der Nennleistung der jeweiligen Windenergieanlage zu deren Minimalleistung erfolgt, wobei Windenergieanlagen mit einer kleineren Abweichung stärker gewichtet werden als Windenergieanlagen mit einer größeren Abweichung.

14. Verfahren nach einem der vorhergehenden Ansprüche, **dadurch gekennzeichnet, dass** die Gewichtung der gewichteten Verteilung und/oder der weiteren gewichteten Verteilung abhängig von der Nennleistung der jeweiligen Windenergieanlage erfolgt, wobei Windenergieanlagen mit einer größeren Nennleistung stärker gewichtet werden als Windenergieanlagen mit einer kleineren Nennleistung.

15. Windpark mit einer Vielzahl von Windenergieanlagen und mindestens einer Steuereinheit, wobei die Steuereinheit dazu ausgebildet ist, das Verfahren nach einem der Ansprüche 1 bis 14 auszuführen und wobei die Steuereinheit eine den Windenergieanlagen übergeordnete Steuereinheit ist.

## Claims

1. A method for operating a wind farm comprising a plurality of wind turbines that can be controlled and/or adjusted so as to output a power in response to a received target value of a power-related electrical variable, wherein the method comprises the following steps:
a) determining an amount of power that can be distributed to the wind turbines depending on a target power for the entire wind farm and on minimum powers of the individual wind turbines,
b) creating a weighted distribution that assigns to each individual wind turbine a portion of the distributable amount of power,
c) defining target values for the wind turbines, which, based on their momentarily available powers, can output less or as much power as was assigned to them by means of the weighted distribution, wherein their target values are defined such that said wind turbines are each controlled so as to output their momentarily available powers, or at least to output their minimum powers,
d) determining a remaining amount of power still to be distributed,
e) creating a further weighted distribution that assigns to each individual remaining wind turbine a portion of the remaining amount of power, which wind turbines, based on their momentarily available powers, can output more power than was assigned to them by means of the previous weighted distribution,
f) defining target values for those of the remaining wind turbines which, based on their momentarily available power, can output less or as much power as was assigned to them by means of the further weighted distribution, wherein their target values are defined such that said wind turbines are each controlled so as to output their momentarily available powers,
g) repeating steps d) to f) until a termination condition is met,
h) specifying the defined target values to the respective wind turbines of the wind farm.

2. The method according to claim 1, **characterized in that** the amount of power that can be distributed to the wind turbines is determined according to step a) as a deviation (SP_{P} - Σₖ CMPLₖ) of the target power for the entire wind farm (SP_{P}) and the minimum powers (CMPLⱼ) of all wind turbines (Σₖ CMPLₖ).

3. The method according to claim 1 or 2, **characterized in that** the weighted distribution is created according to step b) by determining intermediate values (V2SPⱼ) as the sum of the respective minimum power (CMPLⱼ) and the deviation (SP_{P} - Σₖ CMPLₖ) multiplied by a weighting factor (gj).

4. The method according to any one of the preceding claims, **characterized in that**, according to step c), for the wind turbines for which the previously determined intermediate value (V2SP_{j∗}) is greater than or equal to their momentarily available power (PA_{j∗}), the power (PA_{j∗}) momentarily available at these wind turbines but at least their respective minimum power (CMPL_{j∗}) is defined as the target value.

5. The method according to any one of the preceding claims, **characterized in that**, according to step d), the remaining amount of power still to be distributed is determined as a further deviation (Σ_{k∗} (V2SP_{k∗} - PA_{k∗})) formed as the sum of the differences of the respective intermediate values (V2SP_{j∗}) and the respective momentarily available powers (PA_{j∗}) of the wind turbines for which the previously determined intermediate value (V2SP_{j∗}) is greater than or equal to the momentarily available power (PA_{j∗}).

6. The method according to any one of the preceding claims, **characterized in that** a remaining amount of residual power still to be distributed is determined as a deviation (Σ_{k∗} (CMPL_{k∗} - PA_{k∗})) formed as the sum of the differences of the minimum power values (CMPL_{j∗}) and the respective momentarily available powers (PA_{j∗}) of the wind turbines, of which the momentarily available powers (PA_{j∗}) are less than the minimum power (PA_{j∗} < CMPL_{j∗}) provided for the respective wind turbine.

7. The method according to claim 6, **characterized in that** the distributable amount of power is corrected, in particular by means of a controller, depending on the residual amount of power.

8. The method according to any one of the preceding claims, **characterized in that**, according to step e), the further weighted distribution is created by determining further intermediate values (V3SP_{j#}) as the sum of the respective previous intermediate values (V2SP_{j#}) and the further deviation (Σₖ (V2SP_{k∗} - PA_{k∗})) multiplied by a further weighting factor (fⱼ).

9. The method according to any one of the preceding claims, **characterized in that**, according to step f), for those of the remaining wind turbines for which the previously determined further intermediate value (V3SP_{j#}) is greater than or equal to their momentarily available power (PA_{j#}), the respective power (PA_{j#}) momentarily available at these wind turbines is defined as the target value.

10. The method according to any one of the preceding claims, **characterized in that** the termination condition is met if the remaining amount of power is less than or equal to a predefined threshold value, and/or if the method has run though a predefined number of iterations, wherein the predefined number of iterations in particular depends on the wind conditions.

11. The method according to any one of the preceding claims, **characterized in that** the weighted distribution and the further weighted distribution have the same weighting and/or **in that** the first weighting factor (gⱼ) and the further weighting factor (fⱼ) are the same.

12. The method according to any one of the preceding claims, **characterized in that** the weighting of the weighted distribution and/or the further weighted distribution takes place depending on the momentarily available power of the respective wind turbine, wherein wind turbines having a higher momentarily available power are weighted to a greater extent than wind turbines having a lower momentarily available power.

13. The method according to any one of the preceding claims, **characterized in that** the weighting of the weighted distribution and/or the further weighted distribution takes place depending on the deviation of the nominal power of the respective wind turbine from the minimum power thereof, wherein wind turbines having a smaller deviation are weighted to a greater extent than wind turbines having a larger deviation.

14. The method according to any one of the preceding claims, **characterized in that** the weighting of the weighted distribution and/or the further weighted distribution takes place depending on the nominal power of the respective wind turbine, wherein wind turbines having a higher nominal power are weighted to a greater extent than wind turbines having a lower nominal power.

15. A wind farm comprising a plurality of wind turbines and at least one control unit, wherein the control unit is configured to carry out the method according to any one of claims 1 to 14 and wherein the control unit is a control unit that is superordinate to the wind turbines.

## Revendications

1. Procédé de fonctionnement d'un parc éolien comprenant une multitude d'éoliennes, lesquelles peuvent être actionnées et/ou réglées pour la distribution d'une puissance en réponse à la réception d'une valeur de consigne d'une grandeur électrique basée sur la puissance, le procédé présentant les étapes suivantes :
a) détermination d'une quantité de puissance susceptible d'être répartie entre les éoliennes, en fonction d'une puissance de consigne pour l'ensemble du parc éolien et de puissances minimales des différentes éoliennes,
b) établissement d'une répartition pondérée, laquelle attribue respectivement une part de la quantité de puissance susceptible d'être répartie aux différentes éoliennes,
c) définition de valeurs de consigne pour les éoliennes pouvant, en raison de leurs puissances actuellement disponibles, distribuer moins de puissance ou juste la quantité qui leur a été attribuée par la répartition pondérée, leurs valeurs de consigne étant définies de telle façon que ces éoliennes sont néanmoins actionnées au moins pour la distribution de leurs puissances minimales respectivement pour la distribution de leurs puissances actuellement disponibles,
d) détermination d'une quantité de puissance restant encore à répartir,
e) établissement d'une autre répartition pondérée, laquelle attribue respectivement une part de la quantité de puissance restante aux éoliennes restantes capables de distribuer plus de puissance que la quantité attribuée à celles-ci par la répartition pondérée précédente, en raison de leurs puissances actuellement disponibles,
f) définition de valeurs de consigne pour les éoliennes restantes pouvant, en raison de leurs puissances actuellement disponibles, distribuer moins de puissance ou juste la quantité attribuée à celles-ci par l'autre répartition pondérée, leurs valeurs de consigne étant définies de telle façon que ces éoliennes sont actionnées respectivement pour la distribution de leurs puissances actuellement disponibles,
g) répétition des étapes d) à f) jusqu'à satisfaction d'une condition d'interruption,
h) spécification des valeurs de consigne définies aux différentes éoliennes du parc éolien.

2. Procédé selon la revendication 1, **caractérisé en ce que** la quantité de puissance susceptible d'être répartie entre les éoliennes est déterminée selon l'étape a) en tant qu'écart (SPₚ - Σₖ CMPLₖ) par rapport à la puissance de consigne pour l'ensemble du parc éolien (SPₚ) et aux puissances minimales (CMPLⱼ) de toutes les éoliennes (Σₖ CMPLₖ).

3. Procédé selon la revendication 1 ou 2, **caractérisé en ce que** la répartition pondérée selon l'étape b) est établie par détermination de valeurs intermédiaires (V2SPⱼ) correspondant à la somme de la puissance minimale respective (CMPLⱼ) et de l'écart (SPₚ - Σₖ CMPLₖ) multiplié par un facteur de pondération (gⱼ).

4. Procédé selon l'une des revendications précédentes, **caractérisé en ce que** selon l'étape c), pour les éoliennes pour lesquelles la valeur intermédiaire déterminée précédemment (V2SP_{j∗}) est supérieure ou égale à leur puissance actuellement disponible (PA_{j∗}), la puissance actuellement disponible (PA_{j∗}) respectivement au niveau de ces éoliennes, cependant au moins leur puissance minimale respective (CMPLj^{∗}), est définie comme valeur de consigne.

5. Procédé selon l'une des revendications précédentes, **caractérisé en ce que** selon l'étape d), la quantité de puissance restant encore à répartir est déterminée en tant qu'autre écart (Σ_{k∗} (V2SP_{k∗}- PA_{k∗})) correspondant à la somme des différences entre les valeurs intermédiaires respectives (V2SP_{j∗}) et les puissances actuellement disponibles (PA_{j∗}) respectives des éoliennes pour lesquelles la valeur intermédiaire déterminée précédemment (V2SP_{j∗}) est supérieure ou égale à la puissance actuellement disponible (PA_{j∗}).

6. Procédé selon l'une des revendications précédentes, **caractérisé en ce qu'**une quantité de puissance résiduelle restant encore à répartir est déterminée en tant qu'écart (Σ_{k∗} (CMPL_{k∗} - PA_{k∗})) correspondant à la somme des différences entre les valeurs de puissance minimales (CMPL_{j∗}) et les puissances actuellement disponibles (PA_{j∗}) respectives des éoliennes dont les puissances actuellement disponibles (PA_{j∗}) sont inférieures à la puissance minimale prévue pour l'éolienne respective (PA_{j∗} < CMPL_{j∗}).

7. Procédé selon la revendication 6, **caractérisé en ce qu'**une correction de la quantité de puissance susceptible d'être répartie est effectuée en fonction de la quantité de puissance résiduelle, en particulier par un dispositif de réglage.

8. Procédé selon l'une des revendications précédentes, **caractérisé en ce que** selon l'étape e), l'autre répartition pondérée est établie par détermination d'autres valeurs intermédiaires (V3SP_{j#}) en tant que somme des valeurs intermédiaires précédentes (V2SP_{j#}) respectives et de l'autre écart (Σₖ (V2SP_{k∗} - PA_{k∗})) multiplié par un autre facteur de pondération (fⱼ).

9. Procédé selon l'une des revendications précédentes, **caractérisé en ce que** selon l'étape f), pour les éoliennes restantes pour lesquelles l'autre valeur intermédiaire définie précédemment (V3SP_{j#}) est supérieure ou égale à leur puissance actuellement disponible (PA_{j#}), la puissance actuellement disponible (PA_{j#}) au niveau de ces éoliennes est définie respectivement comme valeur de consigne.

10. Procédé selon l'une des revendications précédentes, **caractérisé en ce que** la condition d'interruption est satisfaite lorsque la quantité de puissance restante est égale ou inférieure à une valeur seuil prédéfinie, et/ou lorsque le procédé a effectué un nombre prédéterminé d'itérations, dans lequel le nombre prédéterminé d'itérations dépend en particulier des conditions de vent.

11. Procédé selon l'une des revendications précédentes, **caractérisé en ce que** la répartition pondérée et l'autre répartition pondérée présentent la même pondération et/ou **en ce que** le premier facteur de pondération (gⱼ) et l'autre facteur de pondération (fⱼ) sont identiques.

12. Procédé selon l'une des revendications précédentes, **caractérisé en ce que** la pondération de la répartition pondérée et/ou de l'autre répartition pondérée est réalisée en fonction de la puissance actuellement disponible de l'éolienne respective, dans lequel des éoliennes dont la puissance actuellement disponible est plus élevée sont pondérées plus fortement que des éoliennes dont la puissance actuellement disponible est plus faible.

13. Procédé selon l'une des revendications précédentes, **caractérisé en ce que** la pondération de la répartition pondérée et/ou de l'autre répartition pondérée est réalisée en fonction de l'écart de la puissance nominale de l'éolienne respective par rapport à sa puissance minimale, dans lequel des éoliennes dont l'écart est plus petit sont pondérées plus fortement que des éoliennes dont l'écart est plus grand.

14. Procédé selon l'une des revendications précédentes, **caractérisé en ce que** la pondération de la répartition pondérée et/ou de l'autre répartition pondérée est réalisée en fonction de la puissance nominale de l'éolienne respective, dans lequel des éoliennes dont la puissance nominale est plus élevée sont pondérées plus fortement que des éoliennes dont la puissance nominale est plus faible.

15. Parc éolien comprenant une multitude d'éoliennes et au moins une unité de commande, dans lequel l'unité de commande est conçue pour mettre en œuvre le procédé selon l'une des revendications 1 à 14 et dans lequel l'unité de commande est une unité de commande hiérarchiquement supérieure aux éoliennes.
